# EUROPÄISCHE PATENTANMELDUNG

(11) **EP 3 285 126 A1**
(43) Veröffentlichungstag der Anmeldung: **21.02.2018**
(21) Anmeldenummer: 16184158.0
(22) Anmeldetag: 15.08.2016
(51) Int. Cl.: G05B 23/02

(54) **PROZESSMESSGERÄT**

(71) Anmelder: Siemens Aktiengesellschaft, 80333 München (DE)
(72) Erfinder: Nicklis, Bernd, 76829 Landau (DE)

(57) **Zusammenfassung**

Ein Prozessmessgerät (1) mit einer Messeinheit (2) zur Umwandlung einer zu messenden Größe in ein elektrisches Messsignal (3) und einer Signalverarbeitungseinrichtung (4) zur Verarbeitung des Messsignals (3) in eine kontinuierliche Folge von digitalen Messwerten (5) weist außerdem eine Datenkompressionseinrichtung (11) auf, die die digitalen Messwerte (5) zum Zwecke der Archivierung in einer Speichereinrichtung (15, 16) komprimiert, wobei Differenzwerte zwischen den Messwerten (5) und einem Erwartungswert (12) ermittelt und mit variabler Länge kodiert werden.

Dabei wird der Umstand genutzt, dass prozess- oder verfahrenstechnischen Anlagen meistens um einen Arbeitspunkt geregelt werden, so dass für die zu messenden Größen Erwartungswerte angegeben werden können, von denen die von den Prozessmessgeräten gelieferten Messwerte eher selten abweichen bzw. um die die Messwerte nur innerhalb eines begrenzten Wertebereichs schwanken.

## Beschreibung

Die Erfindung betrifft ein Prozessmessgerät

In der Prozessautomatisierung und Verfahrenstechnik kommt eine Vielzahl unterschiedlicher Prozessmessgeräte zur Messung von physikalischen oder chemischen Größen zum Einsatz. Solche Größen sind zum Beispiel Druck, Durchfluss, Temperatur, Konzentrationen bestimmter Stoffkomponenten in Gas- oder Flüssigkeitsgemischen, pH-Wert von Flüssigkeiten und viele mehr. Jedes Prozessmessgerät enthält eine Messeinheit, die die zu messende Größe in ein elektrisches Messsignal umwandelt, und eine Signalverarbeitungseinrichtung, die das Messsignal in eine kontinuierliche Folge von digitalen Messwerten verarbeitet. Die Messwerte können angezeigt und/oder an eine übergeordnete Automatisierungseinrichtung übertragen werden.

Zum Zwecke der Diagnose, der Früherkennung oder Nachverfolgung von Fehlern, der vorausschauenden Instandhaltung (predictive maintenance) oder aufgrund gesetzlicher Vorschriften ist es häufig notwendig, die Messwerte und/oder Geräteinformationen über einen längeren Zeitraum unterbrechungsfrei aufzuzeichnen, so dass sie bei Bedarf abgerufen und ausgewertet werden können. Dazu können in ein geräteinterner Speicher oder eine externe Speichereinrichtung (Datenlogger) verwendet werden. Je nach Aufzeichnungsdauer kann es sich um hohe Datenmengen handelt, was im Falle des geräteinternen Speichers angesichts der in der Regel begrenzten Speicherkapazität und im Falle der externen Speichereinrichtung angesichts begrenzter Übertragungskapazität zu Problemen führen kann.

Gemäß der Erfindung werden diese Probleme durch das in Anspruch 1 definierte Prozessmessgerät gelöst, von dem vorteilhafte Weiterbildungen in den Unteransprüchen angegeben sind.

Gegenstand der Erfindung ist somit ein Prozessmessgerät mit einer Messeinheit zur Umwandlung einer zu messenden Größe in ein elektrisches Messsignal, einer Signalverarbeitungseinrichtung zur Verarbeitung des Messsignals in eine kontinuierliche Folge von digitalen Messwerten und mit einer Datenkompressionseinrichtung zur Komprimierung der digitalen Messwerte zur Archivierung in einer Speichereinrichtung, wobei die Datenkompressionseinrichtung dazu ausgebildet ist, Differenzwerte zwischen den Messwerten und einem Erwartungswert zu ermitteln und mit variabler Länge zu kodieren.

Die Erfindung geht von der Erkenntnis aus, dass für technische Prozesse oder Verfahren, die Gegenstand der Prozessautomatisierung bzw. Verfahrenstechnik sind, meistens ein Arbeitspunkt angegeben werden kann, der den typischen Betrieb der prozess- oder verfahrenstechnischen Anlage kennzeichnet. Dies ist insbesondere dann der Fall, wenn eine Regelung dafür sorgt, dass keine großen Abweichungen von dem Arbeitspunkt auftreten. Für zu messenden Größen können daher Erwartungswerte angegeben werden, von denen die von den Prozessmessgeräten gelieferten Messwerte eher selten abweichen bzw. um die die Messwerte nur innerhalb eines begrenzten Wertebereichs schwanken. Dies gilt insbesondere für Messwerte aus der Stoffanalyse, z. B. Gas- oder Flüssigkeitsanalyse, also beispielsweise die Konzentration von Schadgasen im Abgas eines geregelten Verbrennungsprozesses. Analysatoren (z. B. Laserspektrometer oder Chromatographen) messen oft mehrere bis viele Prozessgrößen gleichzeitig, so dass sich hier das Problem der begrenzten Speicherkapazität und Übertragungskapazität in verstärktem Maße stellt.

Indem nicht die Messwerte selbst sondern nur die Differenzen zwischen den Messwerten und dem Erwartungswert archiviert und dazu noch mit variabler Länge kodiert werden, wird eine hohe Datenkompression ohne Informationsverlust erreicht. Je weniger sich ein Messwert von dem Erwartungswert unterscheidet, umso kürzer ist seine Kodierungslänge. Für die Kodierung kommen verschiedene herkömmliche Verfahren infrage, z. B. Präfix-Code, Huffman-Code oder Golomb-Code.

Damit die unterschiedlich langen kodierten Differenzwerte voneinander unterscheidbar sind, werden zwischen ihnen entweder Trennzeichen eingefügt, deren Kodierung (Bitsequenz) in den kodierten Differenzwerten nicht vorkommt, oder jeder Differenzwert hat eine individuelle Kodierung, welche in einer vorgegebenen Anzahl von nachfolgenden Differenzwerte nicht noch mal vorkommt. Damit sind die kodierten Differenzwerte eindeutig unterscheidbar, so dass die originalen Messwerte aus den archivierten Differenzwerte und dem bekannten Erwartungswert rekonstruiert werden können.

Die Kodierung der Differenzwerte erfolgt vorzugsweise mit dem Vorzeichen und dem Betrag der Differenz, wodurch sich die Anzahl der Kodierungen für die Differenzwerte halbiert. Die Kodierung für das Vorzeichen muss eindeutig von der für den Betrag unterscheidbar sein. Dies durch eine charakteristische Bitsequenz geschehen oder eine definierte Position des Vorzeichens, beispielsweise zwischen dem charakteristischen Trennzeichen und dem Betrag des darauf folgenden Differenzwertes.

Da sich die von den Prozessmessgerät gelieferten Messwerte vergleichsweise langsam ändern, ist in vorteilhafter Weise eine weitergehende Datenkomprimierung möglich, indem bei einer Anzahl von unmittelbar aufeinanderfolgenden gleichen Differenzwerten nur einer dieser Differenzwerte kodiert und ihm ein die Anzahl der unmittelbar aufeinanderfolgenden gleichen Differenzwerten angebendes Datum angefügt wird. Alternativ kann das Datum auch den Zeitpunkt des kodierten Differenzwertes angeben (Zeitstempel), so dass die Dauer bis zu dem Zeitpunkt eines neuen kodierten Differenzwertes (neuer Zeitstempel) angibt, wie lange der Messwert unverändert geblieben ist.

Zu Beginn der Kodierung von Differenzwerten kann ein initiales Datum erzeugt werden, welches den Erwartungswert und den Startzeitpunkt der Messung beinhaltet, auf die sich alle folgenden kodierten Differenzwerte beziehen. Ändert sich der Erwartungswert, so wird dieser oder seine Änderung wieder als neues Bezugsdatum in den komprimierten Daten hinterlegt. Wird die Messung unterbrochen, so muss der Startzeitpunkt bei Wiederaufnahme der Archivierung von Messwerten hinterlegt werden, so dass die folgenden kodierten Differenzwerte wieder einen zeitlichen Bezugspunkt haben.

Der Erwartungswert für die Messwerte kann von einem Anwender im Rahmen einer Parametrierung an das Prozessmessgerät übertragen oder in dieses eingegeben werden. Dies kann über eine geeignete Parametrierungsschnittstelle, eine auch zur Übertragung der Messwerte vorgesehene Kommunikationsschnittstelle, oder Eingabemittel wie eine Tastatur oder ein an dem Prozessmessgeräts erfolgen.

Die komprimierten Messdaten, also die kodierten Differenzwerte zwischen den Messwerten und dem Erwartungswert, können in einer geräteinternen Speichereinrichtung archiviert und/oder mittels einer geeigneten Datenübertragungseinheit an eine Speichereinrichtung außerhalb des Prozessmessgeräts übertragen werden. Als Datenübertragungseinheit für die zu archivierenden komprimierten Messdaten kann auch die oben erwähnte Kommunikationsschnittstelle dienen, über die die originalen Messwerte zum Zwecke der Steuerung und Regelung an eine übergeordnete Automatisierungseinrichtung übertragen werden.

Der Erwartungswert kann als fester Wert von dem Anwender in das Prozessmessgerät eingegeben oder von dem übergeordneten Automatisierungssystem an das Prozessmessgerät übertragen werden. In diesem Fall wird der Erwartungswert einmalig oder bei jeder Neufestsetzung archiviert, so dass anhand des archivierten Erwartungswerts und der komprimierten Differenzwerte die originalen Messwerte bei Bedarf ohne Weiteres rekonstruiert werden können.

Es besteht auch die Möglichkeit, dass das Prozessmessgerät selbst den Erwartungswert aus einer vorgegebenen Anzahl von aufeinanderfolgenden Messwerten bildet und in der Reihenfolge der Archivierung den nachfolgend gebildeten kodierten Differenzwerten vorstellt. So kann der Erwartungswert aktualisiert bzw. neu gebildet werden, wenn eine vorgegebene Anzahl von aufeinanderfolgenden Differenzwerten einen Schwellenwert überschreitet. Dazu kann der Erwartungswert beispielsweise um den Betrag des Schwellenwerts oder um den Mittelwert der Differenzwerte erhöht oder verringert werden. Der neue Erwartungswert oder seine Änderung wird zeitsynchron in die Folge der komprimierten Messdaten eingefügt.

Für den Fall, dass das Prozessmessgerät eine Diagnoseeinrichtung enthält, die Informationen über den Ist-Zustand des Geräts erhebt, können auch diese Informationen auf die gleich Weise wie die Messwerte komprimiert und archiviert werden, indem Differenzen zwischen diesen Informationen und vorgegebenen korrespondierenden Informationen im Soll-Zustand des Geräts zu ermittelt und mit variabler Länge kodiert werden.

Zur weiteren Erläuterung der Erfindung wird im Folgenden auf die Figuren der Zeichnung Bezug genommen; im Einzelnen zeigen jeweils in schematischer Darstellung:
- Fig. 1: ein erstes Ausführungsbeispiel des erfindungsgemäßen Prozessmessgeräts,
- Fig. 2: ein Beispiel für die Kodierung der Differenzwerte und
- Fig. 3: eine Beispiel für eine Folge von kodierten Differenzwerten.

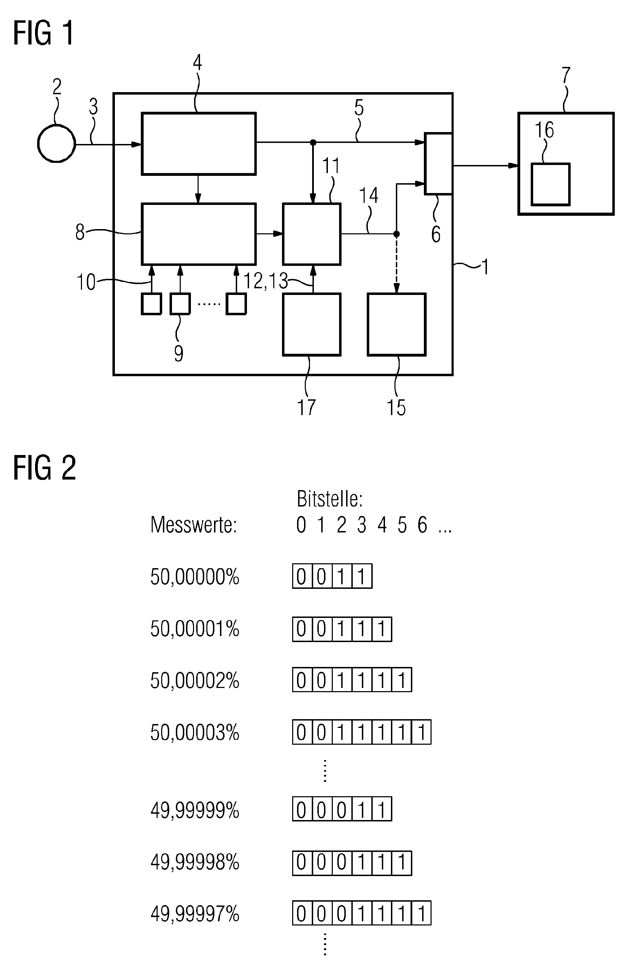

Fig. 1 zeigt ein Blockschema eines Prozessmessgeräts 1 mit einer Messeinheit 2, die eine zu messende Prozessgröße, z. B. Temperatur, in ein elektrisches Messsignal 3 umwandelt. Bei der Messeinheit 2 kann es sich auch um ein Analysenteil, z. B. ein Absorptionsspektrometer, handeln. Das Messsignal 3 wird in einer Signalverarbeitungseinrichtung 4 in eine kontinuierliche Folge von digitalen Messwerten 5 umgesetzt. Je nach Art des Messsignals 3 kann die Signalverarbeitung unterschiedliche Verarbeitungsstufen wie Analogfilterung, Digitalisierung, Digitalfilterung, Fourier-Transformation, Normalisierung usw. umfassen. Die Messwerte 5 können unverändert oder gemittelt auf einem hier nicht gezeigten Display angezeigt und/oder über eine Kommunikationsschnittstelle 6 drahtgebunden (z. B. über einen Bus) oder drahtlos an eine übergeordnete Automatisierungseinrichtung 7 übertragen werden. Bei dem gezeigten Beispiel enthält das Prozessmessgerät 1 auch eine Diagnoseeinrichtung 8, die von der Signalverarbeitungseinrichtung 4 und anderen Komponenten und Sensoren 9 des Geräts 1 Informationen 10 über den Ist-Zustand des Geräts 1 sammelt und auswertet, um Abweichungen vom Soll-Zustand des Geräts 1 und insbesondere auch Fehlfunktionen zu erkennen. Die erfassten Informationen können z. B. die Betriebsspannung, Betriebstemperatur, Grenzwertverletzungen, Fehlermeldungen usw. umfassen.

Um die Messwerte 5 und je nach Erfordernis auch die für den Gerätezustand relevanten Informationen zu archivieren, enthält das Prozessmessgerät 1 eine Datenkompressionseinrichtung 11, die Differenzen zwischen den Messwerten 5 und einem Erwartungswert 12 für die Messwerte ermittelt und diese Differenzwerte mit variabler Länge zu kodiert. In entsprechende Weise können auch Differenzen zwischen den Geräteinformationen 10 oder daraus abgeleiteten Informationen, insbesondere generierte Fehlermeldungen, und korrespondierenden Informationen 13 für den Soll-Zustand des Geräts zu ermittelt und ebenfalls mit variabler Länge zu kodiert werden. Die durch die Kodierung komprimierten Daten 14 werden laufend in einem geräteinternen Speicher 15 archiviert und/oder oder an eine externe Speichereinrichtung 16 übertragen. Die externe Speichereinrichtung 16 kann in der übergeordneten Automatisierungseinrichtung 7 angeordnet sein, wobei dann die komprimierten Daten 14 über denselben Kommunikationsweg wie die Messwerte 5 übertragen werden können. Die externe Speichereinrichtung kann aber auch über eine separate Kommunikationsschnittstelle bzw. Datenverbindung mit dem Prozessmessgerät 1 verbunden sein.

Der Erwartungswert 12 für die Messwerte kann von einem Anwender im Rahmen einer Parametrierung an das Prozessmessgerät 1 übertragen bzw. in dieses eingegeben werden. Dies kann über eine geeignete Parametrierungsschnittstelle, beispielsweise die hier gezeigte Kommunikationsschnittstelle 6, oder Eingabemittel 17 (Tastatur, Touchscreen) zur Bedienung des Prozessmessgeräts 1 erfolgen. Die Informationen 13 über den Soll-Zustand des Geräts 1 können auf die gleiche Weise in das Gerät 1 gelangen oder bereits bei der Herstellung in dem Gerät 1 hinterlegt werden.

Fig. 2 zeigt ein Beispiel für eine sehr einfache Kodierung der Differenzwerte zwischen den Messwerten 5 und dem Erwartungswert 12. Bei dem gezeigten Beispiel soll der Erwartungswert 500000ppm = 50% betragen. Es wird angenommen, dass die Messwerte 5 in einem Bereich von +/- 10% um diesen Erwartungswert schwanken. Die Kodierung der Differenzwerte zwischen den Messwerten und dem Erwartungswert erfolgt in der Weise, dass zwischen zwei aufeinanderfolgenden kodierten Differenzwerten jeweils ein als Trennzeichen in Form einer Bitfolge eingefügt ist, die nicht für die Kodierung der Differenzwerte verwendet wird. Bei dem gezeigten Beispiel besteht das Trennzeichen aus dem Bit 0 und dem Bit 1, die beide den Wert 0 haben. Darauf folgt das Bit 3, welches das Vorzeichen des kodierten Differenzwertes angibt, hier der Wert 1 für das positive und der Wert 0 für das negative Vorzeichen. Danach folgt der längenkodierte Differenzwert mit dem Wert 1 für die Nulldifferenz (Messwert = Erwartungswert), dem Wert 11 für eine absolute Differenz 0,00001%, dem Wert 111 für die absolute Differenz 0,00002%, dem Wert 1111 für die absolute Differenz 0,00003%, dem Wert 11111 für die absolute Differenz 0,00004% usw. In dem gezeigten Beispiel wird dies von oben nach unten am Beispiel der Messwerte 50,00000%, 50,00001%, 50,00002% und 50,00003%, sowie 49,99999%, 49,99998% und 49,99997% verdeutlicht.

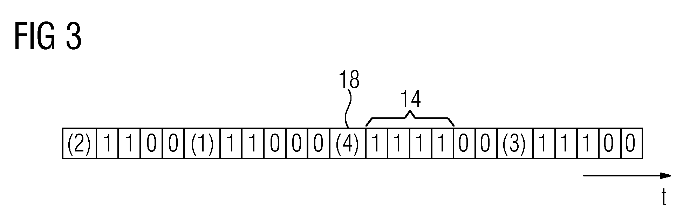

Fig. 3 zeigt ein Beispiel für eine Folge von kodierten Differenzwerten (von rechts nach links) resultierend aus einer Messwertfolge mit einer Archivierungsrate von einer Sekunde. Das heißt, dass jede Sekunde ein Messwert erzeugt und seine Differenz zu dem Erwartungswert kodiert wird. Die Differenzwerte benötigen daher keine Zeitstempel. Bei dem hier gezeigten Beispiel besteht die Messwertfolge aus den Messwerten 50,00001% für 3 Sekunden, 50.00002% für 4 Sekunden, 49,99999% für eine Sekunde und 50% für 2 Sekunden. Bei aufeinander folgenden gleichen Messwerten wird der Differenzwert zu dem Erwartungswert nur einmal kodiert und ihm ein Datum 18 angehängt, das die Anzahl der aufeinander folgenden gleichen Messwerte angibt. Das Datum 18 folgt auf das jeweils höchstwertige Bit des Differenzwertes 14 und ist in dem gezeigten Beispiel nicht kodiert sondern lediglich exemplarisch hervorgehoben (Wert in Klammern).

## Patentansprüche

1. Prozessmessgerät (1) mit einer Messeinheit (2) zur Umwandlung einer zu messenden Größe in ein elektrisches Messsignal (3), einer Signalverarbeitungseinrichtung (4) zur Verarbeitung des Messsignals (3) in eine kontinuierliche Folge von digitalen Messwerten (5) und mit einer Datenkompressionseinrichtung (11) zur Komprimierung der digitalen Messwerte (5) zur Archivierung in einer Speichereinrichtung (15, 16), wobei die Datenkompressionseinrichtung (11) dazu ausgebildet ist, die Differenzwerte zwischen den Messwerten (5) und einem Erwartungswert (12) zu ermitteln und mit variabler Länge zu kodieren.

2. Prozessmessgerät (1) nach Anspruch 1, **gekennzeichnet durch** Eingabemittel (17) und/oder eine Kommunikationsschnittstelle (6) zur Entgegennahme des Erwartungswerts (12) aufweist.

3. Prozessmessgerät (1) nach Anspruch 1 oder 2, **dadurch gekennzeichnet, dass** die Speichereinrichtung (15) Bestandteil des Prozessmessgeräts (1) ist.

4. Prozessmessgerät (1) nach einem der vorangehenden Ansprüche" **gekennzeichnet durch** eine Datenübertragungseinheit (6) zur Übertragung der komprimierten Messdaten (14) an eine außerhalb des Prozessmessgeräts (1) angeordnete Speichereinrichtung (16) ist.

5. Prozessmessgerät (1) nach einem der vorangehenden Ansprüche, **dadurch gekennzeichnet, dass** es sich um ein Gerät (1) zur Stoffanalyse, insbesondere zur Gasanalyse, handelt.

6. Prozessmessgerät (1) nach einem der vorangehenden Ansprüche, **dadurch gekennzeichnet, dass** die Datenkompressionseinrichtung (11) ferner dazu ausgebildet ist, bei einer Anzahl von unmittelbar aufeinanderfolgenden gleichen Differenzwerten nur einen dieser Differenzwerte zu kodieren und ihm ein die Anzahl angebendes Datum (18) anzufügen.

7. Prozessmessgerät (1) nach einem der vorangehenden Ansprüche, **dadurch gekennzeichnet, dass** die Datenkompressionseinrichtung (11) weiterhin dazu ausgebildet ist, den Erwartungswert (12) aus einer vorgegebenen Anzahl von aufeinanderfolgenden Messwerten (5) zu bilden und den nachfolgend gebildeten kodierten Differenzwerten (14) voranzustellen.

8. Prozessmessgerät (1) nach Anspruch 7, **dadurch gekennzeichnet, dass** die Datenkompressionseinrichtung (11) außerdem dazu ausgebildet ist, den Erwartungswert (12) in Abhängigkeit davon neu zu bilden, dass vorgegebenen Anzahl von aufeinanderfolgenden Differenzwerten (14) einen Schwellenwert überschreitet.

9. Prozessmessgerät (1) nach einem der vorangehenden Ansprüche, **dadurch gekennzeichnet, dass** es weiterhin eine Diagnoseeinrichtung (8) enthält, die Informationen (10) über den Ist-Zustand des Geräts (1) erhebt, wobei die Datenkompressionseinrichtung (11) dazu ausgebildet ist, zum Zwecke der Archivierung dieser Informationen (10) in der Speichereinrichtung (15, 16) Differenzen zwischen diesen Informationen (10) und vorgegebenen korrespondierenden Informationen (13) im Soll-Zustand des Geräts (1) zu ermitteln und mit variabler Länge zu kodieren.
